# DEMANDE DE BREVET EUROPEEN

(11) **EP 2 608 116 A1**
(43) Date de publication de la demande: **26.06.2013**
(21) Numéro de dépôt: 11306754.0
(22) Date de dépôt: 22.12.2011
(51) Int. Cl.: G06K 19/077

(54) **Carte à puce et procédé de fabrication associé**

(71) Demandeur: Gemalto SA, 92190 Meudon (FR)
(72) Inventeur: Ottobon, Stéphane, 92190 Meudon (FR); Oddou, Laurent, 92190 Meudon (FR); Froger, Alexis, 92190 Meudon (FR); Renouard, Jérémy, 92190 Meudon (FR)

(57) **Abrégé**

Les modes de réalisation de la présente invention concernent une carte à puce (1) comportant :
- une puce à circuit intégré (10),
- un corps de carte primaire (3) correspondant à un premier facteur de forme et comprenant un logement (5), sur une face avant (7), destiné à recevoir la puce à circuit intégré (10), ledit corps de carte primaire (3) comprenant également un contour détachable (c1), périphérique au logement (5), correspondant à un deuxième facteur de forme et définissant un corps de carte secondaire (11),
caractérisée en ce que le corps de carte primaire (3) possède une première épaisseur (e1), entre la face avant (7) et une face arrière (8) et en ce que le corps de carte secondaire (11) possède une deuxième épaisseur (e2), entre une face avant (7, 12) et une face arrière (14), inférieure à la première épaisseur (e1).

## Description

La présente invention concerne le domaine des communications sans fil et plus particulièrement les cartes à puce destinées à être installées dans les téléphones mobiles ou téléphones portables. Les cartes à puces sont généralement constituées d'un corps de carte en forme de parallélépipède rectangle, ayant une épaisseur réduite, destiné à recevoir un puce à circuit intégré. Dans le cas des cartes de type module d'identité d'abonné (SIM) ou carte universelle de circuit intégré (UICC), le format des corps de carte est normalisé mais, au fil du temps, différents formats ont été développés de sorte que le format utilisé peut varier d'un téléphone à un autre. Il apparaît donc nécessaire pour les fabricants de cartes à puce de proposer aux utilisateurs des solutions pour fournir une carte à puce permettant de s'adapter à l'ensemble des connecteurs utilisés dans les téléphones ou autre appareil portatif utilisant une carte SIM. De plus, la miniaturisation des composants électroniques poussent les constructeurs à développer des formats de carte, aussi appelés facteurs de forme, de plus en plus petits.

Ainsi, alors que les premières cartes SIM avaient un format ID-1 ayant une longueur de 85,60 mm et une largeur de 53,98 mm et une épaisseur de 0,82 mm, les formats suivants ont conduits à une réduction de la longueur et de largeur des cartes avec les formats 2FF (longueur de 25 mm ; largeur de 15 mm ; épaisseur 0,82mm) et 3FF (longueur de 15 mm ; largeur de 12 mm ; épaisseur 0,82mm). Aujourd'hui, les constructeurs développent un nouveau facteur de forme de type 4FF dont les dimensions sont encore plus réduites avec notamment une épaisseur réduite.

La nécessité est donc de proposer une solution permettant de réaliser, pour un coût réduit, une carte à puce permettant de s'adapter aux nouveaux facteurs de forme.

Ainsi, la présente invention concerne une carte à puce comportant :
- une puce à circuit intégré,
- un corps de carte primaire correspondant à un premier facteur de forme et comprenant un logement, sur une face avant, destiné à recevoir la puce à circuit intégré, ledit corps de carte primaire comprenant également un contour détachable, périphérique au logement, correspondant à un deuxième facteur de forme et définissant un corps de carte secondaire,
   dans laquelle le corps de carte primaire possède une première épaisseur, entre la face avant et une face arrière et dans laquelle le corps de carte secondaire possède une deuxième épaisseur, entre une face avant et une face arrière, inférieure à la première épaisseur.

Selon un autre aspect de la présente invention, le corps de carte primaire comprend au moins un deuxième contour détachable périphérique au logement et correspondant à au moins un troisième facteur de forme et définissant au moins un autre corps de carte secondaire.

Selon un aspect additionnel de la présente invention, le corps de carte primaire comprend au moins un deuxième contour détachable distinct du premier contour détachable et correspondant à au moins un troisième facteur de forme, ledit, au moins un, contour détachable comprenant une cavité destinée à recevoir le premier contour détachable pour former un corps de carte secondaire.

Selon un aspect supplémentaire de la présente invention, ladite carte à puce comprend au moins une deuxième puce à circuit intégré et dans laquelle le corps de carte primaire comprend au moins un deuxième logement, sur sa face avant, destiné à recevoir la, au moins une, deuxième puce à circuit intégré, ledit corps de carte primaire comprenant également au moins un deuxième contour détachable, périphérique au, au moins un, deuxième logement et correspondant à au moins un troisième facteur de forme, ledit au moins un, deuxième contour détachable définissant un corps de carte secondaire.

Selon un autre aspect de la présente invention, le deuxième facteur de forme correspond à un facteur de forme de type 4FF.

Selon un aspect additionnel de la présente invention, le, au moins un, troisième facteur de forme comprend un facteur de forme de type 3FF ou de type 2FF.

Selon un aspect supplémentaire de la présente invention, le premier facteur de forme correspond à un facteur de forme de type ID-1.

Selon un aspect additionnel de la présente invention, le, au moins un, contour détachable est formé par des encoches situées sur la face avant et la face arrière du corps de carte.

Selon un autre aspect de la présente invention le, au moins un, contour détachable est formé par une découpe partielle du contour.

Selon un aspect supplémentaire de la présente invention, la découpe partielle est formée par poinçonnage.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins :
- la figure 1 représente un schéma d'une vue en coupe transversale d'une portion de corps de carte selon un mode de réalisation de la présente invention ;
- la figure 2 représente un schéma d'une face avant d'un corps de carte primaire selon un premier mode de réalisation de la présente invention ;
- la figure 3 représente un schéma d'une vue en coupe transversale d'une portion du corps de carte de la figure 2 ;
- la figure 4 représente un schéma d'une face avant d'un corps de carte primaire selon un deuxième mode de réalisation de la présente invention ;
- la figure 5 représente un schéma d'une face avant d'un corps de carte primaire selon un troisième mode de réalisation de la présente invention ;
- la figure 6 représente un schéma synoptique des différentes étapes du procédé de fabrication d'une carte à puce selon les modes de réalisation de la présente invention ;
- la figure 7 représente un schéma d'une vue en coupe transversale d'une carte à puce selon un premier mode de réalisation de la présente invention ;

Sur ces figures les mêmes numéros de référence représentent des éléments similaires.

Dans la description qui va suivre, on désigne de façon générale:
- Le terme « USIM » est l'acronyme anglais Universal Subscriber Identification Module et correspond à un module universel d'identité d'abonné ;
- Le terme « UICC » est l'acronyme anglais Universal Integrated Circuit Card et correspond à une carte universelle à circuit intégré ;
- Le terme « épaisseur » pour désigner l'épaisseur d'un corps de carte entre sa face avant et sa face arrière correspond à la plus grande épaisseur entre la face avant et la face arrière du corps de carte ;
- Le terme « ID-1 » désigne un facteur de forme défini par la norme ISO 7816 ;
- Les termes « 2FF et 3FF » désignent une deuxième et une troisième génération de facteur de forme standardisés ;
- Le terme « 4FF » désigne une quatrième génération de facteur de forme actuellement en cours de standardisation ;

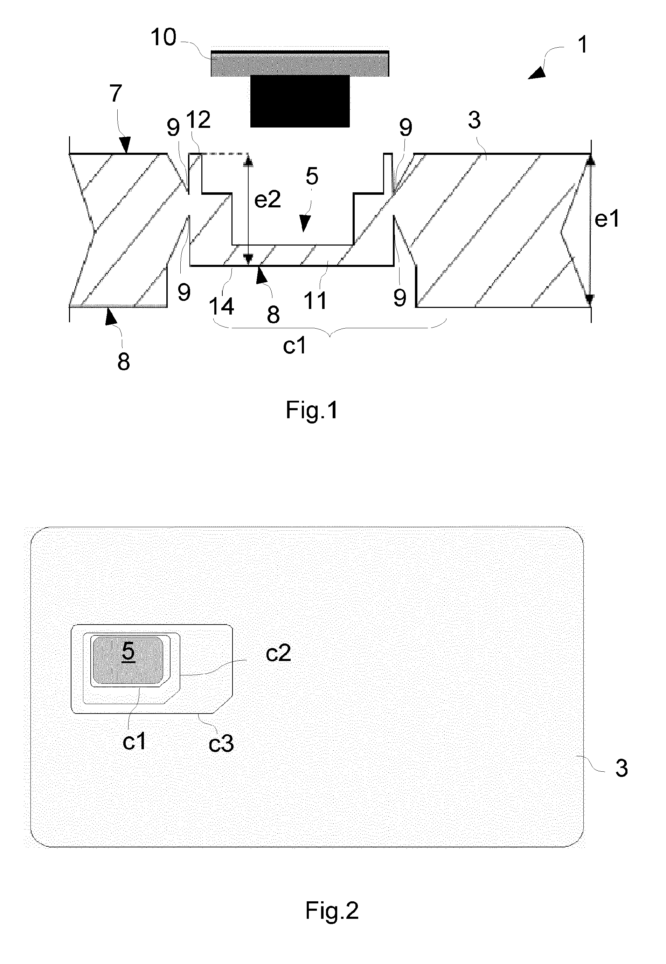

Les modes de réalisation de la présente invention concernent une carte à puce dont le profil présente au moins deux épaisseurs correspondant aux épaisseurs de deux facteurs de forme. La figure 1 représente une vue en coupe transversale d'une portion d'une carte à puce 1. La carte à puce 1 comprend un corps de carte primaire 3 correspondant à un premier facteur de forme ayant une première épaisseur e1, entre sa face avant 7 et sa face arrière 8, et qui comprend un logement 5 destiné à recevoir une puce à circuit intégré 10 sur l'une des faces correspondant à la face avant 7. Les dimensions et positions du logement 5 étant définies par le premier facteur de forme. Ce corps de carte primaire 3 comprend également un contour détachable c1, périphérique au logement 5, correspondant à un deuxième facteur de forme et définissant un corps de carte secondaire 11. Le corps de carte secondaire 11 a une deuxième épaisseur e2, entre sa face avant 12, qui est confondue avec la face avant 7 du corps de carte primaire, et sa face arrière 14, qui est inférieure à la première épaisseur e1. Le contour détachable c1 est formé par des encoches 9 situées sur la face avant 7 et sur la face arrière 8 du corps de carte primaire 3. De plus, le corps de carte primaire 3 peut contenir des contours détachables additionnels pour former des corps de carte secondaires ayant des facteurs de forme différents. Différents modes de réalisation permettant d'obtenir une pluralité de corps de carte ayant des facteurs de forme différents vont être décrits plus en détails dans la suite de la description.

Selon un premier mode de réalisation représenté sur la figure 2, la carte à puce 1 comprend un corps de carte primaire 3 dont le facteur de carte est de type ID-1 et qui présente une première épaisseur e1, par exemple 0,82mm, et une deuxième épaisseur e2, par exemple 0,68mm, à l'intérieur d'un premier contour détachable c1 correspondant à un facteur de forme de type 4FF. Le logement 5 destiné à recevoir la puce à circuit intégré est situé à l'intérieur du premier contour détachable c1. Le corps de carte primaire 3 comprend également un deuxième c2 et un troisième c3 contour détachable correspondant respectivement à un facteur de forme 3FF et 2FF, lesdits contours détachables c2 et c3 étant situés de manière périphérique au logement 5. La position des contours détachables c2 et c3 par rapport au logement 5 correspondent aux spécifications données par les normes des facteurs de forme 3FF et 2FF. Les différents contours détachables sont donc périphériques les uns par rapport aux autres. Les facteurs de forme de type 2FF et 3FF ayant une épaisseur identique au format ID1, le corps de carte primaire 3 a une épaisseur de 0,82mm à l'exception du premier contour détachable c1 qui a une épaisseur de 0,68mm.

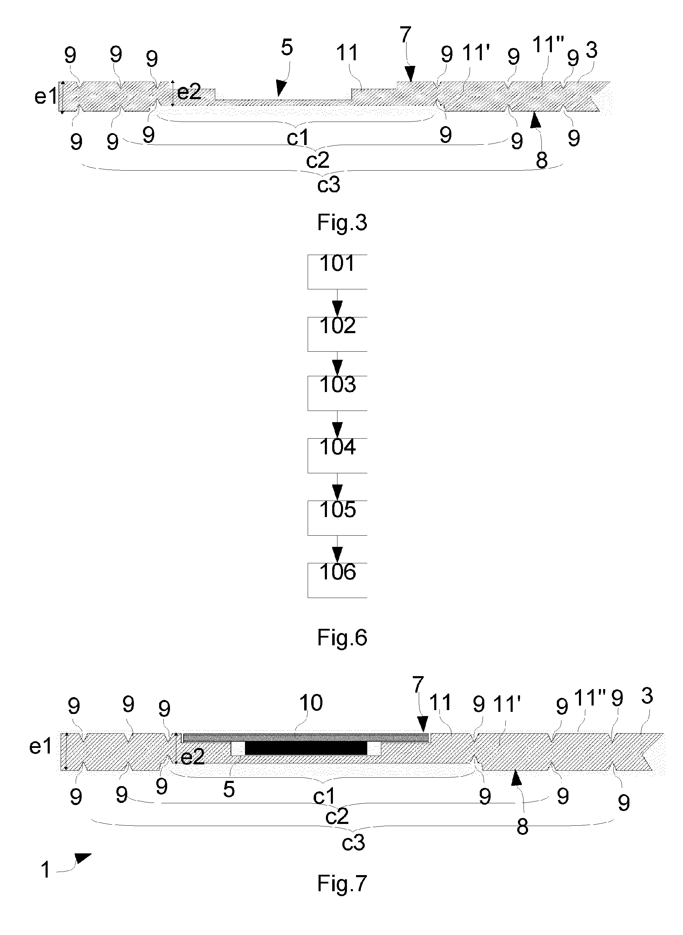

La figure 3 représente une vue en coupe transversale d'une portion du corps de carte primaire 3 de la figure 2. Les contours détachables c1, c2 et c3 sont délimités par des prédécoupes comprenant des encoches 9. En détachant le contour c1, on obtient une carte à puce secondaire 11 ayant une épaisseur e2 de 0,68mm tandis qu'en détachant suivant le contour c2 ou c3, on obtient un corps de carte secondaire 11' ou 11" ayant une épaisseur de 0,82mm au niveau de sa périphérie.

Ainsi, lorsqu'un utilisateur détache l'un des contours de la carte à puce 1, le corps de carte obtenu est conforme au facteur de forme correspondant au contour détaché puisque la longueur, la largeur et l'épaisseur au niveau de la périphérie du corps de carte obtenu correspondent aux spécifications du facteur de forme. Le corps de carte ainsi obtenu peut alors être introduit dans un téléphone recevant des cartes à puce correspondant à ce facteur de forme.

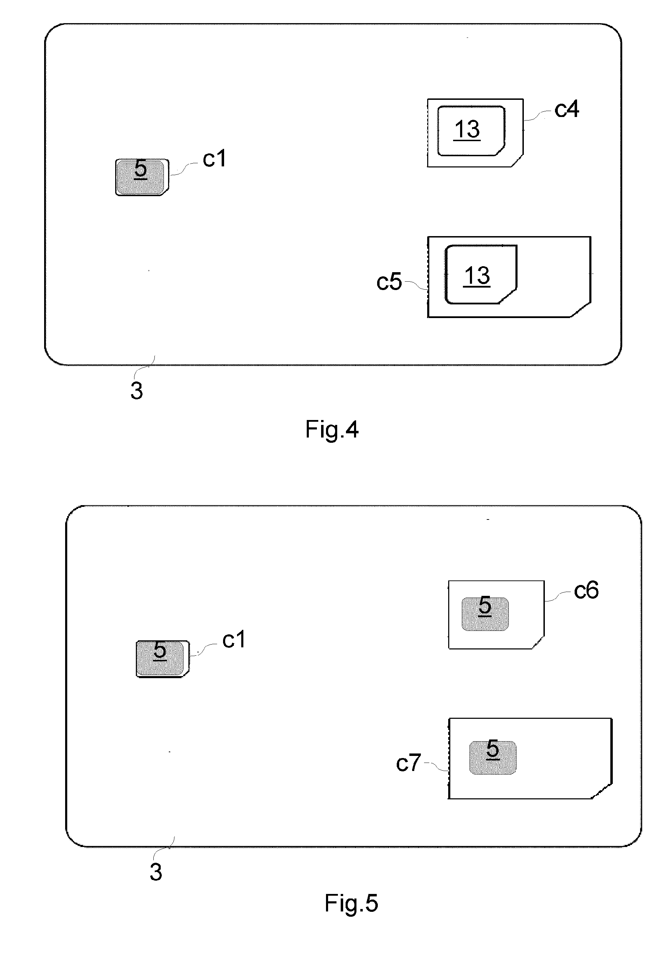

Selon un deuxième mode de réalisation représenté sur la figure 4, la carte à puce comprend un corps de carte primaire 3 dont le facteur de forme est de type ID-1 et qui présente une première épaisseur e1, par exemple 0,82mm, et une deuxième épaisseur e2, par exemple 0,68mm, à l'intérieur d'un premier contour détachable c1 correspondant à un facteur de forme de type 4FF. Le logement 5 destiné à recevoir la puce à circuit intégré est situé à l'intérieur du premier contour détachable c1. Le corps de carte primaire 3 comprend également un deuxième c4 et un troisième c5 contour détachable qui sont distincts entre eux et distincts du premier contour détachable c1. Le deuxième contour détachable c4 et respectivement le troisième contour détachable c5 correspond à un facteur de forme de type 3FF, respectivement de type 2FF, dans lequel est ménagé une cavité 13 destinée à recevoir le contour détachable c1. Les dimensions de la cavité 13 correspondent donc aux dimensions du corps de carte 4FF. De plus, la position de la cavité 13 par rapport au deuxième contour détachable c4, respectivement par rapport au troisième contour détachable c5, est déterminée de manière à obtenir un corps de carte de type 3FF, respectivement 2FF, lorsque le contour détachable c1 est placé dans la cavité 13. Ainsi, les deuxième et troisième contours détachables c4 et c5 correspondent à des adaptateurs permettant d'adapter un corps de carte de type 4FF à un format de type 3FF ou 2FF.
Ainsi, en détachant le premier contour détachable c1, l'utilisateur obtient un corps de carte au format 4FF. Si, l'utilisateur a besoin d'un corps de carte au format 3FF ou 2FF, il détache le deuxième c4 ou troisième c5 contour détachable et introduit le premier contour détachable c1 dans la cavité 13. La fixation du premier contour détachable c1 dans la cavité 13 se fait par exemple par un montage en force ou par collage, la cavité 13 pouvant par exemple comprendre une partie auto-collante.

Selon un troisième mode de réalisation représenté sur la figure 5, la carte à puce comprend un corps de carte primaire 3 dont le le facteur de carte est de type ID-1 et qui présente une première épaisseur e1, par exemple 0,82mm, et une deuxième épaisseur e2, par exemple 0,68mm, à l'intérieur d'un premier contour détachable c1 correspondant à un facteur de forme de type 4FF. La carte à puce comprend également un deuxième c6 et un troisième c7 contour détachable distincts entre eux et distincts du premier contour c1. Les différents contours détachables comprennent un logement 5 destiné à recevoir une puce à circuit intégré. Ainsi, la carte à puce comprend trois puces à circuit intégré et suivant le format de carte ou facteur de forme désiré, l'utilisateur détache le contour adéquat.
Les dimensions des différents logements 5 sont définies en fonction de la taille des puces à circuit intégré destinées à être placées dans lesdits logements 5. De plus, l'emplacement des logements 5 à l'intérieur des contours c1, c2 et c3 est définit par les spécifications des facteur de forme 4FF, 3FF et 2FF.

Par ailleurs, il est à noter que l'invention ne se limite pas à aux modes de réalisation décrits précédemment mais à tout corps de carte ayant un premier facteur de forme d'une première épaisseur et présentant au moins un contour détachable ayant un deuxième facteur de forme d'une deuxième épaisseur inférieure à la première. Ainsi, le corps de facteur primaire ne correspond pas forcément à un facteur de carte de type ID1 et le nombre de contours détachables peut être différent de trois. De plus, les différents contours détachables peuvent avoir des épaisseurs différentes les unes des autres et différentes de l'épaisseur du corps de carte primaire.

Les différentes étapes du procédé de fabrication d'une carte à puce telle que décrit précédemment vont maintenant être décrits plus en détails à partir de la figure 6.

La première étape 101 correspond à la réalisation d'un moule correspondant à l'empreinte d'un facteur de forme correspondant au corps de carte primaire, c'est-à-dire au format ID-1 dans le cas présent. De plus, le moule peut comprendre un relief sur sa face arrière définissant l'intérieur des contours détachables correspondant à un facteur de forme ayant une épaisseur inférieure à l'épaisseur du corps de carte primaire, l'épaisseur du relief correspondant à la différence d'épaisseur entre le facteur de forme du contour considéré et l'épaisseur du corps de carte primaire. Dans l'exemple des figures 2, 4 et 5, cela correspondrait à un relief correspondant à l'intérieur du contour c1 et ayant une épaisseur de 0,14 mm (0,82-0,68).

² D'autre part, le moule peut également comprendre un relief sur sa face avant correspondant à un ou plusieurs logements 5 ou une ou plusieurs cavités 13. Par exemple, dans le mode de réalisation de la figure 2, le relief correspondrait au logement 5 destiné à recevoir la puce à circuit intégré 10. Pour le mode de réalisation de la figure 4, le relief correspondrait au logement 5 destiné à recevoir la puce à circuit intégré et aux cavités 13 et dans le cas de la figure 5, le relief correspondrait aux trois logements destinés à recevoir une puce à circuit intégré.

La deuxième étape 102 correspond au moulage par injection de matière moulable, comme par exemple un polymère thermoplastique, du corps de carte primaire à l'aide du moule fourni par l'étape 101.

La troisième étape 103 correspond à l'étape de démoulage du corps de carte injecté à l'étape 102.

La quatrième étape 104 est une étape qui peut être facultative selon le moule utilisé à l'étape 101 et qui correspond à l'usinage ou au fraisage du corps de carte. En effet, si le moule de l'étape 101 ne comprend pas de reliefs pour les logements 5 destinés à recevoir une puce à circuit intégré, les éventuelles cavités 13 ainsi que la compensation de la différence de hauteur pour le ou les contours détachables ayant une épaisseur inférieure à l'épaisseur du corps de carte primaire, alors un usinage ou fraisage de la carte peut permettre de créer ces logements, cavités et différences de hauteur.

La cinquième étape 105 est aussi une étape qui peut être facultative, car les prédécoupes peuvent également être réalisées lors du moulage. Si le moule ne prévoit pas les prédécoupe, l'étape 105 correspond au prédécoupage du corps de carte pour définir le ou les contours détachables. Différentes techniques peuvent être utilisées pour réaliser ces contours :
- en réalisant des encoches sur l'ensemble des contours sur l'une ou les deux faces de la carte, comme représenté sur les figures 1 et 3,
- en réalisant une découpe partielle des contours pour obtenir des attaches ou brettelles d'attache locales sur le contour. Ces attaches ou bretelles peuvent alors être cassées aisément par un utilisateur pour séparer le contour détachable du reste du corps de carte primaire,
- en combinant les deux techniques précédentes. Un coté du contour peut, par exemple, comprendre des encoches sur une ou deux faces tandis que les autres côtés du contour peuvent être découpés partiellement ou totalement.

Par ailleurs, différentes techniques permettent de prédécouper le corps de carte, comme par exemple un faisceau laser, un jet haute pression ou un poinçon mécanique.

La sixième étape 106 correspond à l'assemblage de la ou des puces à circuit intégré dans les logements 5. L'assemblage est, par exemple, réalisé par collage. La figure 7 représente une coupe transversale d'une carte à puce ayant un corps de carte selon le mode de réalisation de la figure 2. Ainsi,la puce à circuit intégré vient se placer dans le logement 5 et affleure au niveau de la face avant 7 du corps de carte 3. De plus, la puce à circuit intégré comprend un sens de montage à respecter, la position des contacts de la puce à circuit intégré étant normalisée.

Ainsi, les modes de réalisation de la présente invention permettent d'obtenir une carte à puce ayant au moins un contour détachable dont l'épaisseur est réduite par rapport au reste du corps de carte de manière à fournir un corps de carte secondaire dont l'épaisseur est différente du corps de carte primaire de la carte à puce comme c'est le cas avec le facteur de forme 4FF par rapport aux facteurs de forme plus anciens pour permettre une adaptation à différents facteurs de forme dont l'un au moins a une épaisseur différente.

## Revendications

1. Carte à puce (1) comportant :
- une puce à circuit intégré (10),
- un corps de carte primaire (3) correspondant à un premier facteur de forme et comprenant un logement (5), sur une face avant (7), destiné à recevoir la puce à circuit intégré (10), ledit corps de carte primaire (3) comprenant également un contour détachable (c1), périphérique au logement (5), correspondant à un deuxième facteur de forme et définissant un corps de carte secondaire (11),
**caractérisée en ce que** le corps de carte primaire (3) possède une première épaisseur (e1), entre la face avant (7) et une face arrière (8) et **en ce que** le corps de carte secondaire (11) possède une deuxième épaisseur (e2), entre une face avant (7, 12) et une face arrière (14), inférieure à la première épaisseur (e1).

2. Carte à puce (1) selon la revendication 1 dans laquelle le corps de carte primaire (3) comprend au moins un deuxième contour détachable (c2, c3) périphérique au logement (5) et correspondant à au moins un troisième facteur de forme et définissant au moins un autre corps de carte secondaire (11', 11").

3. Carte à puce (1) selon la revendication 1 dans laquelle le corps de carte primaire (3) comprend au moins un deuxième contour détachable (c4, c5) distinct du premier contour détachable et correspondant à au moins un troisième facteur de forme, ledit, au moins un, contour détachable (c4, c5) comprenant une cavité (13) destinée à recevoir le premier contour détachable (c1) pour former un corps de carte secondaire.

4. Carte à puce (1) selon la revendication 1 dans laquelle ladite carte à puce (1) comprend au moins une deuxième puce à circuit intégré (10) et dans laquelle le corps de carte primaire (3) comprend au moins un deuxième logement (5), sur sa face avant (7), destiné à recevoir la, au moins une, deuxième puce à circuit intégré (10), ledit corps de carte primaire (3) comprenant également au moins un deuxième contour détachable (c6, c7), périphérique au, au moins un, deuxième logement (5) et correspondant à au moins un troisième facteur de forme, ledit au moins un, deuxième contour détachable (c6, c7) définissant un corps de carte secondaire.

5. Carte à puce (1) selon la revendication 1 dans laquelle le deuxième facteur de forme correspond à un facteur de forme de type 4FF.

6. Carte à puce (1) selon l'une des revendications 2 à 4 dans laquelle le, au moins un, troisième facteur de forme comprend un facteur de forme de type 3FF.

7. Carte à puce (1) selon l'une des revendications 2 à 4 dans laquelle le, au moins un, troisième facteur de forme comprend un facteur de forme de type 2FF.

8. Carte à puce (1) selon l'une des revendications précédentes dans laquelle le premier facteur de forme correspond à un facteur de forme de type ID-1.

9. Carte à puce (1) selon l'une des revendications précédentes dans laquelle le, au moins un, contour détachable est formé par des encoches (9) situées sur la face avant (7) et la face arrière (8) du corps de carte.

10. Carte à puce (1) selon l'une des revendications précédentes dans laquelle la découpe est formé par une découpe partielle du contour.

11. Carte à puce (1) selon la revendication 10 précédentes dans laquelle la découpe partielle du contour est formée par poinçonnage.
